# EUROPÄISCHE PATENTSCHRIFT

(11) **EP 3 704 923 B1**
(45) Veröffentlichungstag und Bekanntmachung des Hinweises auf die Patenterteilung: **27.09.2023**
(21) Anmeldenummer: 19161337.1
(22) Anmeldetag: 07.03.2019
(51) Int. Cl.: A01C 7/04, A01C 7/08

(54) **ANORDNUNG FÜR EINE LANDWIRTSCHAFTLICHE SÄMASCHINE, VERFAHREN ZUM VEREINZELN VON SAATKÖRNERN IN EINER ANORDNUNG FÜR EINE LANDWIRTSCHAFTLICHE SÄMASCHINE SOWIE SÄMASCHINE**
ASSEMBLY FOR AN AGRICULTURAL SEEDING MACHINE, METHOD FOR SEPARATING SEED GRAINS IN AN ARRANGEMENT FOR AN AGRICULTURAL SEEDING MACHINE AND SEEDING MACHINE
DISPOSITIF POUR UN SEMOIR AGRICOLE, PROCÉDÉ DE SÉPARATION DES SEMENCES DANS UN DISPOSITIF POUR UN SEMOIR AGRICOLE AINSI QUE SEMOIR

(43) Veröffentlichungstag der Anmeldung: 09.09.2020
(73) Patentinhaber: Kverneland Group Soest GmbH, 59494 Soest (DE)
(72) Erfinder: Scheideler, Bernhard, 37688 Beverungen (DE); Schumacher, Ferdinand, 59510 Lippetal-Oestinghausen (DE)
(74) Vertreter: Bittner, Thomas L.

(56) Entgegenhaltungen:
- EP-A1- 2 497 351
- EP-A1- 3 335 535
- EP-A1- 3 586 586
- EP-B1- 2 448 393
- EP-B1- 2 854 500
- EP-B1- 2 855 036
- WO-A1-2011/056123

## Beschreibung

Die Erfindung betrifft eine Anordnung und ein Verfahren zum Vereinzeln von Saatkörnern in einer Anordnung für eine landwirtschaftliche Sämaschine sowie eine Sämaschine.

### Hintergrund

Landwirtschaftliche Sämaschinen dienen dazu, ein Saatgut auf dem Feld auszubringen. Verschiedene Bauarten von Sämaschinen sind als solche bekannt. Hierzu gehören Sämaschinen, bei denen das Saatgut aus einem Vorratsbehälter mittels eines Luftstroms zum Säherz einer Säreihe transportiert wird, wobei Sämaschinen regelmäßig eine Anordnung von mehreren Säreihen aufweisen, die quer zur Fahrtrichtung nebeneinander angeordnet sind, um jeweils Saatkörner auszubringen. Zum Erzeugen und zum Bereitstellen des die Saatkörner transportierenden Luftstroms kann die Sämaschine über ein Gebläse verfügen. Am Säherz werden die zugeführten Saatkörner in einem Sammelraum aufgenommen, um diese dann an eine im Gehäuse des Säherzens angeordnete Vereinzelungseinrichtung abzugeben. Mit Hilfe der Vereinzelungseinrichtung werden die Saatkörner vereinzelt, um sie anschließend für eine Einzelkornsaat zum Erdboden hin auszubringen, üblicherweise über ein sogenanntes Schussrohr.

Für das Vereinzeln der Saatkörner im Säherzen sind unterschiedliche Mechanismen bekannt. In einer Ausgestaltung wird im Gehäuse des Säherzens für die Vereinzelungseinrichtung eine Überdruckumgebung breitgestellt, also Druckverhältnisse, bei denen im Gehäuse ein höherer Druck als der Umgebungsdruck des Gehäuses des Säherzens herrscht. Hiervon zu unterscheiden ist der Betrieb einer Vereinzelungseinrichtung in einer Unterdruckumgebung. Um in dem Gehäuse eine Überdruckumgebung bereitzustellen, wird in das Innere des Gehäuses ein Luftstrom eingeleitet, der mittels des Gebläses der Sämaschine erzeugt werden kann.

Dokument EP 2 854 500 B1 offenbart ein landwirtschaftliches Werkzeug mit einer Vorrichtung zum Zuführen von körnigem Gut wie Saatgut, Dünger oder Pestizid, bei der Vorrichtung ist Folgendes vorgesehen: mindestens zwei Messvorrichtungen; eine erste Antriebsvorrichtung, welche über eine druckbeaufschlagende Luftleitung an die Messvorrichtungen zum Erzeugen eines druckbeaufschlagenden Luftstroms zur Druckbeaufschlagung der Messvorrichtungen angeschlossen ist, und einen zentralen Behälter, welcher angeordnet ist, um über jeweilige Zuführleitungen mit Hilfe eines jeweiligen Zuführluftstroms das Gut zu der jeweiligen Messvorrichtung zuzuführen; mindestens zwei Trenneinheiten, die an eine jeweilige Messvorrichtung angeschlossen sind und angeordnet sind, das Gut, das in die jeweiligen Zuführleitungen eintritt, von dem jeweiligen Zuführluftstrom zu trennen. Es sind eine zweite Antriebsvorrichtung zum Erzeugen des Zuführluftstroms und eine Zusammenschlussverbindung zum Zusammenschließen mindestens eines Teils des Zuführluftstroms mit dem druckbeaufschlagenden Luftstrom vorgesehen, wobei die Zusammenschlussverbindung die jeweilige Trenneinheit an die druckbeaufschlagende Luftleitung anschließt, um einen Luftstrom, der aus der jeweiligen Trenneinheit ausströmt, mit dem jeweiligen druckbeaufschlagenden Luftstrom zusammenzuschließen.

Dokument EP 2 855 036 B1 betrifft einen Abscheider zum Abscheiden von körnigem Material, beispielsweise Saatgut, Düngemittel oder Schädlingsbekämpfungsmittel, aus einem materialbefrachteten Luftstrom, wobei der Abscheider Folgendes aufweist: eine Abscheiderzone, die einen Einlass für einen materialbefrachteten Luftstrom, einen Materialauslass und einen Luftauslass hat; und wenigstens zwei Abscheiderteile, die sich im Wesentlichen nur entlang eines Materialstroms in der Abscheiderzone erstrecken und zwischen denen ein Abscheiderspalt gebildet wird, der ausreichend schmal ist, um zu ermöglichen, dass Luft, aber nicht das körnige Material, durch ihn hindurchgeht, wobei der Abscheiderspalt an dem Materialauslass wenigstens teilweise offen ist, gesehen in einer Richtung, die im Wesentlichen parallel mit dem Materialstrom ist, so dass ermöglicht wird, dass Material, das in dem Abscheiderspalt steckenbleibt, diesen mit Hilfe von Verdrängung hauptsächlich entlang des Materialstroms verlässt. Die Abscheiderteile definieren zusammen einen geometrischen Körper, der sich zwischen dem Einlass und dem Materialauslass erstreckt.

Dokument EP 2 448 393 B1 offenbart eine Feststoffteilchen-Beförderungs- und -Abgabeanordnung, die Folgendes aufweist: ein Reservoir, das Feststoffteilchen enthält und eine Abgaberöhre hat, die an demselben befestigt ist, wobei Luft unter Druck für das Reservoir bereitgestellt wird, um die Feststoffteilchen in einem Luftstrom mitzunehmen, um die Feststoffteilchen über die Abgaberöhre aus dem Reservoir zu entfernen; ein hohles längliches Element, das eine Seitenwand hat, wobei wenigstens ein Abschnitt der Seitenwand des hohlen länglichen Elements mehrere Öffnungen in derselben hat, wobei das hohle längliche Element ferner ein erstes offenes Ende, das zum Aufnehmen vom Luftstrom mitgenommener Feststoffteilchen aus dem Reservoir mit der Abgaberöhre verbunden ist, und ein zweites entgegengesetztes offenes Ende einschließt; und einen Abgabemechanismus, der zum Aufnehmen und Abgeben des teilchenförmigen Materials mit dem zweiten offenen Ende des hohlen länglichen Elements verbunden ist. Wenn das teilchenförmige Material das hohle längliche Element wenigstens teilweise füllt, geht ein verringerter Luftstrom durch die Öffnungen desselben hindurch und das hohle längliche Element reguliert dadurch den Strom von Feststoffteilchen zu dem Abgabemechanismus, um ein übermäßiges Beschicken des Abgabemechanismus mit den Feststoffteilchen zu verhindern. Das hohle längliche Element hat die Form einer Röhre, wobei das hohle längliche Element mit einer oberen Luftröhre verbunden ist, die mit dem Reservoir verbunden ist und ein unteres mit Öffnungen versehenes röhrenförmiges Sieb einschließt, das mit dem Abgabemechanismus verbunden ist. Die obere Luftröhre ist auf eine halb abgedichtete Weise mit dem unteren mit Öffnungen versehenen röhrenförmigen Sieb verbunden. Die obere Luftröhre schließt einen nach außen verjüngten unteren Endabschnitt ein, der für eine halb abgedichtete Verbindung mit dem unteren mit Öffnungen versehenen röhrenförmigen Sieb eingerichtet ist. Der untere Endabschnitt der oberen Luftröhre ist in der Richtung des Feststoffteilchenstroms nach außen verjüngt. Die obere Luftröhre schließt ferner eine innere Lippenerweiterung ein, die auf eine beabstandete Weise von dem nach außen verjüngten unteren Endabschnitt aus nach innen angeordnet ist. Das untere mit Öffnungen versehene röhrenförmige Sieb schließt einen oberen Kantenabschnitt ein, der zwischen dem nach außen verjüngten unteren Abschnitt und der inneren Lippenerweiterung der oberen Luftröhre angeordnet ist und dieselben in Eingriff nimmt.

Dokument EP 3 335 535 A1 betrifft eine Vorrichtung zum Fördern von auf einer landwirtschaftlichen Fläche auszubringendem granularem Material. Die Vorrichtung umfasst einen Vorratsbehälter für das granulare Material, eine Vereinzelungseinrichtung und einen pneumatischen Förderkanal zum pneumatischen Fördern von granularem Material vom Vorratsbehälter zur Vereinzelungseinrichtung. Im Bereich der Mündung des pneumatischen Förderkanals in die Vereinzelungseinrichtung mündet wenigstens ein Luftkanal in die Vereinzelungseinrichtung und ein Luftversorgungskanal verbindet den Bereich der Mündung des pneumatischen Förderkanals in die Vereinzelungseinrichtung mit einem Gehäuse einer Vereinzelungstrommel oder Vereinzelungsscheibe der Vereinzelungseinrichtung. Im Bereich der Mündung des wenigstens einen Luftkanals in die Vereinzelungseinrichtung ist eine Düse vorgesehen, so dass über den wenigstens einen Luftkanal zugeführte Luft eine höhere Geschwindigkeit erhält, als die über den pneumatischen Förderkanal in die Vereinzelungseinrichtung zugeführte Luft. Es ist eine Bypass-Leitung mit einstellbarer Luftfördermenge vorgesehen, welche stromaufwärts der Düse vom wenigstens einen Luftkanal oder dem pneumatischen Förderkanal abzweigt und in den Luftversorgungskanal oder in das Gehäuse der Vereinzelungstrommel oder Vereinzelungsscheibe mündet.

Dokument EP 2 497 351 A1 offenbart eine pneumatische Einzelkornsämaschine mit einem Nachfüllsystem für zumindest einem mit einem Überdruck beaufschlagten, einen Saatgutvorratsbehälter aufweisenden Vereinzelungsgehäuse einer landwirtschaftlichen Einzelkornsämaschine. Dem Vereinzelungsgehäuse ist zumindest eine mit einer Druckdifferenz beaufschlagte Vereinzelungstrommel zugeordnet, welche in Perforationsreihen angeordnete Perforationen aufweist, an denen sich die Saatkörner bei der Durchführung der Perforationen durch den Saatgutvorratsbehälterbereich anlagern. Dem Vereinzelungsgehäuse wird mittels zumindest einer pneumatisch beaufschlagten und oberhalb des Saatgutvorratsbehälterbereiches im Vereinzelungsgehäuse ausmündenden Nachfüllleitung das sich in einem Vorratsbehälter befindliche Saatgut zugefördert. Es ist vorgesehen, dass über die pneumatische Nachfüllleitung ein ständig aufrechterhaltener Überdruck in dem Vereinzelungsbereich des Vereinzelungsgehäuses erzeugt wird, so dass über die Nachfüllleitung in ununterbrochener Weise zumindest teilweise die an den Perforationen der Vereinzelungstrommel anliegende Druckdifferenz erzeugbar ist. Der Saatgutvorratsbehälter weist mehrere Zufuhröffnungen für die Nachfüllleitung auf. Die Nachfüllleitung ist wahlweise an eine der Zufuhröffnungen luftdicht anschließbar und die nicht an die Nachfüllleitung eingeschlossenen Zufuhröffnungen sind mit Verschlusselementen luftdicht verschließbar.

Dokument WO 2011/056123 A1 betrifft ein Aussaatverfahren an einer Sämaschine, umfassend mindestens einen Saatgutbehälter für Saatkerne oder dergleichen und mehrere Werkzeuge zum Einbringen des Saatkerne in den Boden. Die Sämaschine weist ein pneumatisches Mittel in Form von mindestens einer Druckquelle, wie beispielsweise einem Ventilator, zum Transport der Saatkerne aus dem Saatgutbehälter zu den Werkzeugen auf. Durch die pneumatischen Mittel wird ein Luftstrom erzeugt. Samenkerne werden dem Luftstrom aus dem Samenbehälter zugeführt. Die Samenkerne werden mindestens einer Kornverteilungseinheit zugeführt. Jede Kornverteilungseinheit wird durch den Luftstrom an der Kornverteilungseinheit unter Druck gesetzt und die Samenkerne werden weiter durch eine Samenleitung für Samenkerne in den Boden transportiert.

Das Dokument EP 3 586 586 A1 offenbart ein Saatgutversorgungssystem mit einem Vereinzeler mit einem Saatgutbehälter, der mit einem Druck in einem gewünschten Druckbereich beaufschlagt wird. Ein Luftstrom für die Saatgutzufuhr befördert das aus einem Vorratsbehälter abgegebene Saatgut zu einer Luftablassanordnung, die sich oberhalb des Vereinzelers befindet. Wenn das Saatgut aus dem Saatgutbehälter mit einer geringeren Geschwindigkeit dosiert wird als aus dem Vorratstank, sammelt sich das Saatgut in der Luftablassanordnung. Der Druck des Saatgutzufuhrluftstroms am oberen Ende der Saatgutsäule schwankt, und eine Barriere sorgt dafür, dass der Luftstrom zwischen der Luftablassanordnung und dem Saatgutbehälter nicht zu stark ansteigt, um den Druck des Dosierers im gewünschten Druckbereich zu halten. Die Barriere kann z. B. durch eine Schleuse oder eine Saatgutsäule in einem Fallrohr zwischen der Luftablassanordnung und dem Saatgutbehälter gebildet werden.

### Zusammenfassung

Aufgabe der Erfindung ist es, eine verbesserte Anordnung sowie ein verbessertes Verfahren zum Vereinzeln von Saatkörnern für eine landwirtschaftliche Sämaschine sowie eine Sämaschine anzugeben, die auf effizientere Art und Weise betrieben werden können.

Zur Lösung der Aufgabe sind ein Verfahren zum Vereinzeln von Saatkörnern sowie eine Anordnung für eine landwirtschaftliche Sämaschine nach den unabhängigen Ansprüchen 1 und 2 geschaffen. Weiterhin ist eine Sämaschine nach Anspruch 8 vorgesehen. Ausgestaltungen sind Gegenstand von abhängigen Unteransprüchen.

Mit Hilfe der vorgeschlagenen Technologie ist ein effizienterer Betrieb der landwirtschaftlichen Sämaschine ermöglicht. Der zum Transport der Saatkörner zum Säherzen hin genutzte Fluidstrom strömt wenigstens teilweise über die Überströmeinrichtung in den Bypass-Kanal und von dort ins Innere des Gehäuses des Säherzens, sodass hierdurch die Ausbildung und / oder die Aufrechterhaltung der Überdruckumgebung in dem Gehäuse unterstützt wird. Im Unterschied zum Stand der Technik wird der Teilstrom des druckbeaufschlagten Fluidstroms so "zweitverwertet" und nicht ungenutzt über einen Auslass an die Umgebung abgegeben.

Bei dem druckbeaufschlagten Fluidstrom kann es sich um einen Luftstrom handeln. In diesem Fall wird ein pneumatischer Vereinzelungsmechanismus genutzt. Das Ausbilden der Überdruckumgebung im Gehäuse des Säherzens bedeutet, dass darin ein Druck herrscht, der höher als der Umgebungsdruck des Gehäuses des Säherzens ist.

Die Überströmeinrichtung ist im Bereich einer den Sammelraum begrenzenden Wandung angeordnet , die der Begrenzung des Sammelraums dient. Die den Sammelraum begrenzende Wandung kann lösbar oder nicht lösbar angeordnet sein.

Die Überströmeinrichtung ist den Teilstrom selbsttätig regulierend ausgeführt . Das Regeln der Überströmeinrichtung, also insbesondere des Umfangs des überströmenden Teilstroms, kann hierbei zum Beispiel frei von einer ergänzenden externen Regelung erfolgen. In Abhängigkeit von unterschiedlichen Betriebssituationen regelt die Überströmeinrichtung den Teilstrom selbsttätig.

Die Überströmeinrichtung ist im Bereich eines Abschnitts der Wandung angeordnet, die einen Füllbereich des Sammelraums begrenzt, derart, dass eine Überströmfläche der Überströmeinrichtung, durch welche hindurch der Teilstrom des druckbeaufschlagten Fluidstroms in den Bypass-Kanal überströmen kann, von den Saatkörnern im Füllbereich zumindest teilweise blockierbar ist. Hierdurch ist eine selbsttätige Regelung der Überströmeinrichtung bereitgestellt, derart, dass abhängig vom momentanen Umfang des Blockierens oder Versetzens der Überströmfläche durch die Saatkörner der überströmende Teilstrom bestimmt ist. Je größer die von der Überströmfläche blockierte Teilfläche ist, um so geringer kann der in den Bypass-Kanal überströmende Teilstrom sein. Dieses führt im Sammelraum für die Saatkörner zu einer Druckerhöhung, wodurch der druckbeaufschlagte Fluidstrom abnehmen kann, was zur Folge hat, dass dem Sammelraum weniger Saatkörner zugeführt werden. Das Blockieren oder Versetzen der Überströmfläche durch die Saatkörner und die hieraus sich ergebende Ereignisfolge, wie beschrieben, bewirken so eine selbsttätige Regelung der Saatkornzufuhr. Vermindert sich das Blockieren der Überströmfläche durch die Saatkörner, weil der Füllstand im Füllbereich des Sammelraums abnimmt, gelangt ein größerer Teilstrom in den Bypass-Kanal, wodurch der Druck im Sammelraum abnimmt, was dann eine Zunahme der Saatkornzufuhr mittels des druckbeaufschlagten Fluidstroms auslöst.

Die Überströmeinrichtung kann in einem den Sammelraum und den Bypass-Kanal voneinander trennenden Wandabschnitt angeordnet sein. Sammelraum und Bypass-Kanal können hierbei auf gegenüberliegenden Seiten des sie voneinander trennenden Wandabschnitts verlaufen.

Die Überströmeinrichtung kann einen Siebabschnitt aufweisen, welcher von dem Teilstrom des druckbeaufschlagten Fluidstroms durchströmbar und die Saatkörner zurückhaltend ausgebildet ist. Der Siebabschnitt ist mit einer Sieblochgröße ausgestattet, die das Überströmen des Teilstroms des druckbeaufschlagten Fluidstroms ermöglicht, die Saatkörner jedoch nicht durchlässt, sodass diese in den Sammelraum und nicht in den Bypass-Kanal gelangen.

Zumindest eines der folgenden Elemente kann wenigstens teilweise im Gehäuse des Säherzens angeordnet sein: Bypass-Kanal und Sammelraum. Der Bypass-Kanal und / oder der Sammelraum können zumindest in Teilen in das Gehäuse des Säherzens integriert sein. Alternativ können Bypass-Kanal und / oder Sammelraum außen an das Gehäuse des Säherzens angeformt sein, beispielsweise einstückig.

Die Überströmeinrichtung kann lösbar montiert sein. Die Überströmeinrichtung kann beispielsweise in eine zugeordnete Wandöffnung einsteckbar und hieraus wieder lösbar sein. Auf diese Weise kann die Überströmeinrichtung zum Beispiel an unterschiedliche Saatkornarten angepasst werden, beispielsweise hinsichtlich einer Lochgröße für die Öffnungen, durch welche der Teilstrom in den Bypass-Kanal überströmt. Die Lochgröße kann an unterschiedliche Saatkorngrößen angepasst sein, um deren Übertritt in den Bypass-Kanal zu verhindern. Auch ermöglicht die lösbare Montage der Überströmeinrichtung gegebenenfalls eine Wartung oder eine Reinigung der Überströmeinrichtung.

Der Bypass-Kanal steht mit einem Fluidauslass in Verbindung, welcher geschlossen und geöffnet werden kann. Der Fluidauslass kann eine regelbare Öffnung aufweisen, deren Öffnungsgrad einstellbar ist, um die Fluidstrommenge einzustellen, die über den Fluidauslass ausströmt. Ergänzend zum Überströmen des Teilstroms in den Bypass-Kanal ist so zumindest ein Teil des überströmenden Fluidstroms nach außen ablassbar, sodass sich die Teilmenge verringert, welche in das Gehäuse des Säherzens eingeleitet wird.

An dem Gehäuse des Säherzens kann ein Anschluss angeordnet sein, welcher an eine Fluidstromzuleitung koppelbar ist, um einen Fluidstrom zum Ausbilden der Überdruckumgebung im Gehäuse einzuleiten. Der Fluidstrom kann als Luftstrom ausgebildet sein. Der Fluidstrom und der druckbeaufschlagte Fluidstrom zum Transport der Saatkörner zum Aufnahmeraum hin können mit Hilfe eines gemeinsamen Gebläses oder mittels getrennter Gebläse erzeugt werden. Im Fall eines gemeinsamen Gebläses wird der von dem gemeinsamen Gebläse erzeugte Fluidstrom dann aufgeteilt, um den druckbeaufschlagten Fluidstrom zum Transport der Saatkörner einerseits und den Fluidstrom zum Ausbilden der Überdruckumgebung im Gehäuse andererseits bereitzustellen. Für das gemeinsame Gebläse kann ein zentrales Gebläse an der landwirtschaftlichen Sämaschine vorgesehen sein, welches zum Beispiel an einem Rahmen der Sämaschine montiert ist.

Bei dieser oder anderen Ausführungsformen können die Saatkörner mittels des druckbeaufschlagten Fluidstroms aus einem zentralen Vorratsbehälter für das Saatgut dem oder den Säherzen zugeführt werden.

Oberhalb des Bypass-Kanals kann ein Kopfbauteil angeordnet sein, welches den Bypass-Kanal wie auch den Sammelraum oben abschließen kann. An dem Kopfbauteil kann der Fluidauslass vorgesehen sein, der geöffnet und geschlossen werden kann, um wahlweise einen Teil des überströmenden Teilstroms nach außen abzulassen. Im Kopfteil können voneinander separierte Teilräume gebildet sein, welche einerseits dem Anschluss an die Zuführleitung mit dem druckbeaufschlagetn und die Saatkörner transportierenden Luftstroms und andererseits der Verbindung des Bypass-Kanals mit dem Fluidauslass dienen. Das Kopfbauteil kann einstückig ausgeführt sein, zum Beispiel als Spritzgussbauteil. Das Kopfbauteil kann lösbar oder nicht lösbar auf einem Abschnitt aufgesetzt sein, in welchem der Sammelraum und der Bypass-Kanal ausgebildet sind. Der Abschnitt kann an das Gehäuse des Säherzens angeformt sein, zum Beispiel einstückig, oder zumindest teilweise in das Gehäuse integriert sein.

In den verschiedenen Ausführungsformen kann die landwirtschaftliche Sämaschine eine Anordnung von mehreren Säreihen aufweisen, die jeweils über die Anordnung mit den Säherzen verfügen. Beispielsweise können die Säreihen in Fahrtrichtung quer nebeneinander liegend angeordnet sein.

Die vorangehend im Zusammenhang mit der Anordnung für die landwirtschaftliche Sämaschine erläuterten Ausgestaltungen können bei dem Verfahren zum Vereinzeln von Saatkörnern entsprechende vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung einer landwirtschaftlichen Sämaschine;
- Fig. 2: eine schematische perspektivische Darstellung einer Anordnung für die Sämaschine, mit der Saatkörner vor dem Ausbringen aufs Feld vereinzelt werden;
- Fig. 3: eine weitere schematische perspektivische Darstellung der Anordnung aus Fig. 2;
- Fig. 4: eine schematische perspektivische Darstellung der Anordnung aus Fig. 2 in Betrieb, wenn Saatkörner zugeführt sind; und
- Fig. 5: eine weitere schematische perspektivische Darstellung der Anordnung aus Fig. 2 im Betrieb.

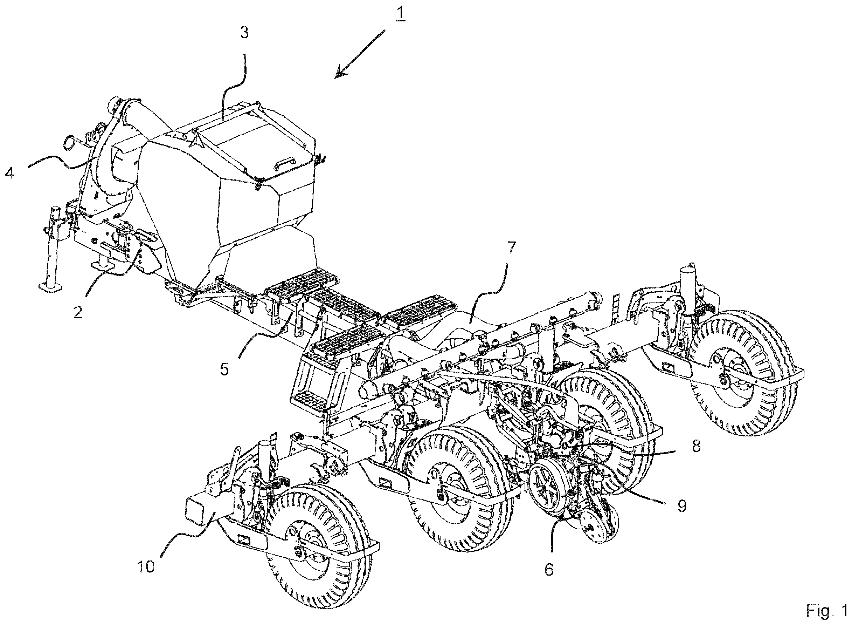

Fig. 1 zeigt eine schematische perspektivische Darstellung einer landwirtschaftlichen Sämaschine 1. An einem zentralen Tragrahmen 2 ist ein zentraler Vorratsbehälter 3 für Saatgut aufgenommen. Mit Hilfe eines Gebläses 4 wird ein Druckluftstrom erzeugt, der in einem Verteiler (hier nicht dargestellt, da vom zentraler Vorratsbehälter 3 verdeckt) auf verschiedene Leitungen aufgeteilt wird. Hierzu gehört dann ein druckbeaufschlagter Luftstrom in einer Zuführleitung 5, über die Saatkörner aus dem zentralen Vorratsbehälter 3 zu einer Säreihe 6 transportiert werden.

Weiterhin wird ein Luftstrom über eine Luftstromzuleitung 7 der Säreihe 6 zugeführt, um den Luftstrom zum Ausbilden einer Überdruckumgebung in einem Gehäuse 8 eines Säherzens 9 der Säreihe 6 bereitzustellen.

Die landwirtschaftliche Sämaschine 1 ist üblicherweise mit mehreren Säreihen vergleichbar der Säreihe 6 ausgeführt. Die sind dann an einem Querrahmenteil 10 nebeneinanderliegend angeordnet. In Fig. 1 zur Vereinfachung der Darstellung nur die einzelne Säreihe 6 gezeigt ist.

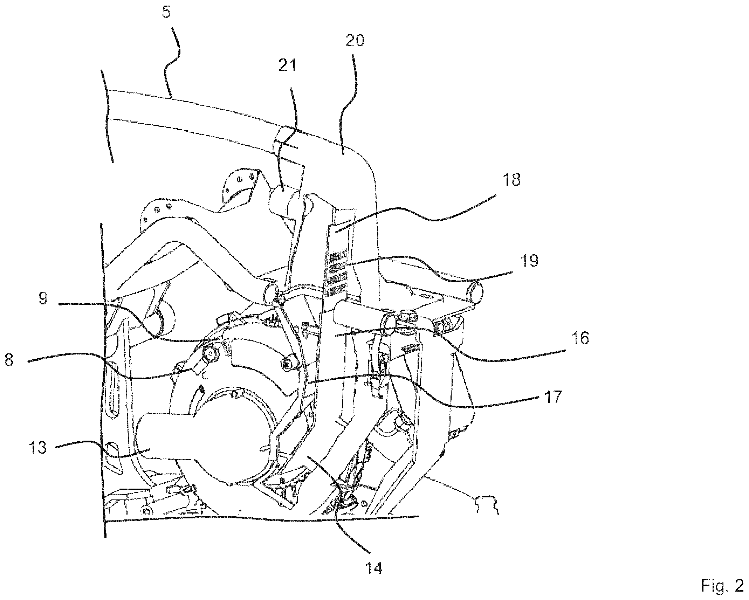

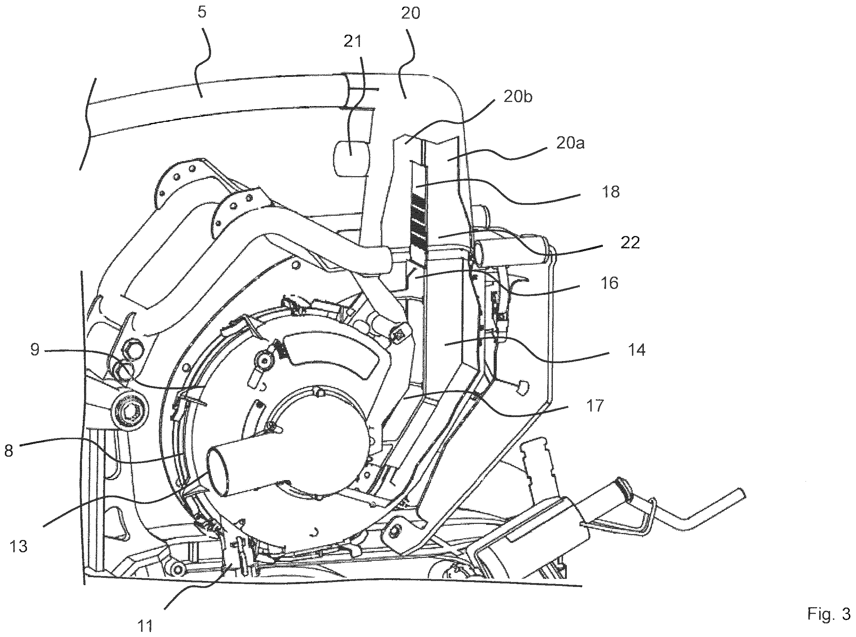

Die Fig. 2 bis 5 zeigen schematische perspektivische Darstellungen einer bei der Säreihe 6 gebildeten Anordnung teilweise im Aufschnitt, mit der die Saatkörner nach dem Zuführen aus dem zentralen Vorratsbehälter 3 über die Zuführleitung 5 vereinzelt werden.

Im Gehäuse 8 des Säherzens 9 ist eine Vereinzelungseinrichtung angeordnet, mit der die dem Säherz 9 zugeführten Saatkörner vereinzelt und dann über eine Auslass 11 des Gehäuses 8 in ein Schussrohr 12 geführt werden, um die Saatkörner zum Boden hin auszubringen.

Zum Betrieb der Vereinzelungseinrichtung wird in dem Gehäuse 8 des Säherzens 9 eine Überdruckumgebung bereitgestellt, also ein Innendruck im Gehäuse 8, der höher ist, als der Umgebungsdruck des Säherzens 9. Hierzu wird über einen Anschluss 13 an dem Gehäuse 8 ein Luftstrom eingeleitet, der über die Luftstromzuleitung 7 zugeführt wird. Vereinzelungseinrichtungen, die auf diese Weise in einer Überdruckumgebung die Saatkörner vereinzeln, sind als solche in verschiedenen Ausführungsformen bekannt.

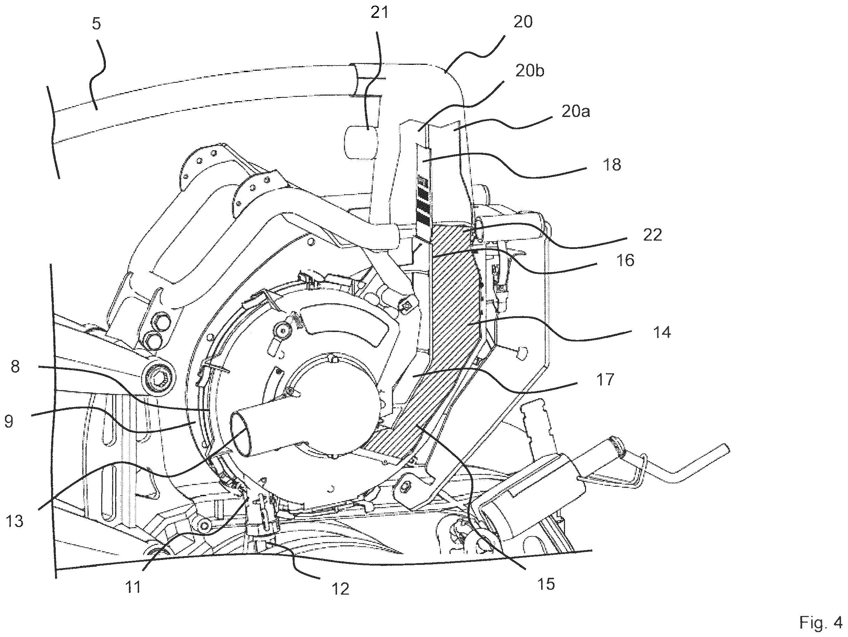

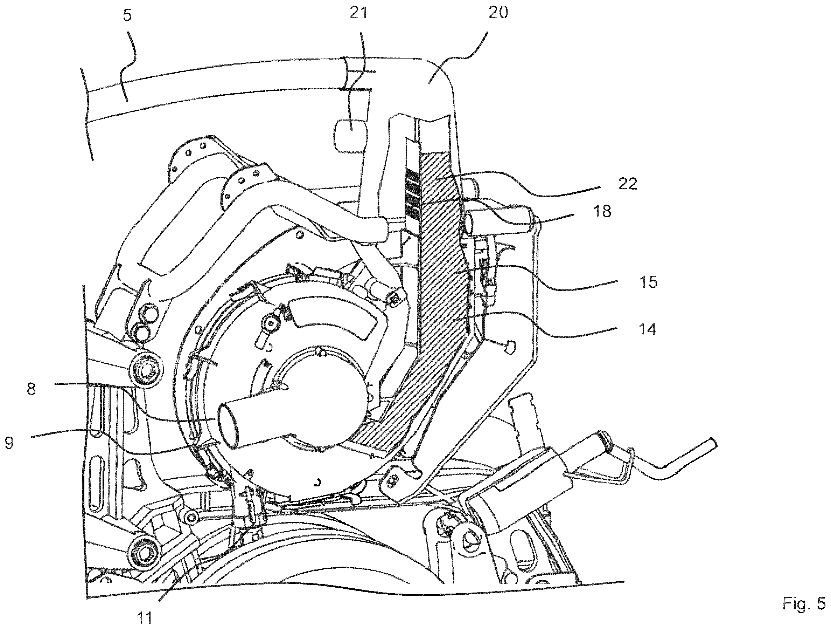

An das Innere des Gehäuses 8, in welchem die Vereinzelungseinrichtung in der Überdruckumgebung arbeitet, schließt einen Sammelraum 14 an, in welchem die mittels des druckbeaufschlagten Luftstroms zugeführten Saatkörner 15 gesammelt werden vgl. Fig. 4 und 5.

In einem Wandabschnitt 16, der den Sammelraum 14 von einem Bypass-Kanal 17 trennt, ist eine Überströmeinrichtung 18 angeordnet, die bei der gezeigten Ausführungsform mit einem Sieb 19 gebildet ist. Auf diese Weise kann ein Teilstrom des druckbeaufschlagten Luftstroms, welcher dem Transport der Saatkörner 15 dient, in den Bypass-Kanal 17 überströmen. Von dort gelangt der Teilstrom ins Innere des Gehäuses 8, um so die Ausbildung und / oder die Aufrechterhaltung der Überdruckumgebung im Gehäuse 8 des Säherzens 9 zu unterstützen. Während ein Teil des druckbeaufschlagten Luftstroms so in den Bypass-Kanal 17 überströmen kann, sind die Saatkörner 15 selbst mittels der Überströmeinrichtung 18 daran gehindert, in den Bypass-Kanal 17 zu gelangen, zum Beispiel aufgrund der Lochgröße in dem Sieb 19. Die Überströmeinrichtung 18 kann lösbar an dem Wandabschnitt 16, welcher den Bypass-Kanal 17 von dem Sammelraum 14 abtrennt, montiert sein.

Oberhalb des Bypass-Kanals 17 ist an einem Kopfbauteil 20, welches den Bypass-Kanal 17 wie auch den Sammelraum 14 oben abschließt, ein Auslass 21 vorgesehen, der geöffnet und geschlossen werden kann, um wahlweise einen Teil des überströmenden Teilstroms nach außen abzulassen. Im Kopfteil 20 sind voneinander separierte Teilräume 20a, 20b gebildet, welcher einerseits dem Anschluss an die Zuführleitung 5 mit dem druckbeaufschlagten und die Saatkörner transportierenden Luftstroms und andererseits der Verbindung des Bypass-Kanals 17 mit dem Auslass 21 dienen.

Die Fig. 4 und 5 zeigen für den Sammelraum eine Befüllung des Aufnahmeraums 14 mit den Saatkörnern 15 in unterschiedlichem Umfang. Der Füllstand ist in Fig. 4 geringer als in Fig. 5. Gemäß der Darstellung in Fig. 5 ist bei dem dort gezeigten Füllstand die Überströmeinrichtung 18 von den Saatkörnern 15 überwiegend bedeckt, insbesondere im Bereiche des Siebs 19, sodass kaum noch oder gar keine Luft in den Bypass-Kanal 17 überströmen kann. Dieses führt zu einer Druckerhöhung oberhalb des mit dem Saatgut in einem Füllbereich 22 gefüllten Aufnahmeraums 14, wodurch sich der Zustrom der luftgeförderten Saatkörner reduziert. Wenn dann der Füllstand wieder abnimmt oder geringer ist (vgl. Fig. 4), kann in größerem Umfang Luft in den Bypass-Kanal 17 überströmen, wodurch der Druck oberhalb der Saatkörner 15 im Sammelraum 14 abnimmt, was eine Zunahme des Transports von Saatkörnern mittels des druckbeaufschlagten Luftstroms zum Sammelraum 14 hin zur Folge hat. Hierdurch ist ein selbstregulierender Mechanismus bereitgestellt, insbesondere hinsichtlich des Überströmens des Teilstroms über die Überströmeinrichtung 18 in den Bypass-Kanal 17.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Vereinzeln von Saatkörnern in einer Anordnung für eine landwirtschaftliche Sämaschine, mit
- Zuführen von Saatkörnern (15) mittels eines druckbeaufschlagten Fluidstroms über eine Zuführleitung (5), die an eine Zuführung koppelt;
- Aufnehmen der über die Zuführung empfangenen Saatkörner in einem Sammelraum (14);
- Abgeben der Saatkörner (15) von dem Sammelraum (14) an eine Vereinzelungseinrichtung, die in einem Gehäuse (8) eines Säherzens (9) angeordnet ist;
- Vereinzeln der Saatkörner (15) mittels der Vereinzelungseinrichtung in dem Gehäuse (8) in einer im Gehäuse (8) ausgebildeten Überdruckumgebung;
- Ausbringen der vereinzelten Saatkörner über einen Auslass (11) des Gehäuses (8); und
- Überströmen eines Teilstrom des druckbeaufschlagten Fluidstroms über eine Überströmeinrichtung (18) im Bereich eines Abschnitts einer Wandung (16), die einen Füllbereich (22) des Sammelraums (14) begrenzt, in einen Bypass-Kanal (17), der getrennt von dem Sammelraum (14) gebildet ist, und von dort in das Gehäuse (8), so dass die Überdruckumgebung im Gehäuse (8) unterstützt wird, wobei das Überströmen frei von einem Übertreten von den Saatkörnern (15) erfolgt;
wobei die Saatkörner (15) dem Sammelraum (14) selbstregulierend zugeführt werden, wobei hierbei
- eine Überströmfläche der Überströmeinrichtung (18), durch welche hindurch der Teilstrom des druckbeaufschlagten Fluidstroms in den Bypass-Kanal überströmt, von den Saatkörnern (15) im Füllbereich (22) des Sammelraums (14) zumindest teilweise blockiert wird, wobei der in den Bypass-Kanal (17) überströmende Teilstrom umso geringer ist, je größer die von der Überströmfläche blockierte Teilfläche ist;
- sich aufgrund der teilweise blockierten Überströmfläche der Druck für die Saatkörner (15) im Sammelraum (14) erhöht, wodurch der druckbeaufschlagte Fluidstrom abnimmt, was zur Folge hat, dass dem Sammelraum (14) weniger Saatkörner zugeführt werden; und
- sich das Blockieren der Überströmfläche durch die Saatkörner (15) vermindert, weil der Füllstand im Füllbereich (22) des Sammelraums (14) abnimmt, so dass ein größerer Teilstrom in den Bypass-Kanal (17) gelangt, wodurch der Druck im Sammelraum (14) abnimmt, was dann eine Zunahme der Saatkornzufuhr mittels des druckbeaufschlagten Fluidstroms auslöst;
**dadurch gekennzeichnet, dass** der Bypass-Kanal (17) mit einem Fluidauslass (21) in Verbindung steht, welcher öffenbar und schließbar ist, sodass ergänzend zum Überströmen des Teilstroms in den Bypass-Kanal (17) zumindest ein Teil des überströmenden Fluidstroms nach außen ablassbar ist, sodass sich die Teilmenge verringert, welche in das Gehäuse (8) des Säherzens (9) eingeleitet wird.

2. Anordnung für eine landwirtschaftliche Sämaschine, mit:
- einer Zuführung, welche an eine Zuführleitung (5) koppelbar ist, über die Saatkörner mittels eines druckbeaufschlagten Fluidstroms zugeführt werden können;
- einem Säherz (9), welches eine Vereinzelungseinrichtung in einem Gehäuse (8) auf-weist, die eingerichtet ist, die Saatkörner in einer im Inneren des Gehäuses (8) ausgebildeten Überdruckumgebung zu vereinzeln und zum Ausbringen über einen Auslass (11) abzugeben;
- einem Sammelraum (14), welcher mit der Zuführung in Verbindung steht und eingerichtet ist, die über die Zuführung empfangenen Saatkörner aufzunehmen und an die Vereinzelungseinrichtung abzugeben;
- einem Bypass-Kanal (17), der getrennt von dem Sammelraum (14) gebildet ist und mit dem Inneren des Gehäuses (8) in Fluidverbindung steht; und
- einer Überströmeinrichtung (18), die im Bereich eines Abschnitts einer Wandung (16) angeordnet ist, welche einen Füllbereich (22) des Sammelraums (14) begrenzt, und die mit der Zuführung und / oder dem Sammelraum (14) in Fluidverbindung steht und eingerichtet ist, einen Teilstrom des druckbeaufschlagten Fluidstroms in den Bypass-Kanal (17) und von dort in das Gehäuse (8) die Überdruckumgebung unterstützend und frei von einem Übertreten von Saatkörnern, die mittels des druckbeauschlagten Fluidstroms transportiert werden, überströmen zu lassen;
wobei die Saatkörner (15) dem Sammelraum (14) selbstregulierend zuführbar sind, wobei hierbei
- eine Überströmfläche der Überströmeinrichtung (18), durch welche hindurch der Teilstrom des druckbeaufschlagten Fluidstroms in den Bypass-Kanal überströmt, von den Saatkörnern (15) im Füllbereich (22) des Sammelraums (14) zumindest teilweise blockiert wird, wobei der in den Bypass-Kanal (17) überströmende Teilstrom umso geringer ist, je größer die von der Überströmfläche blockierte Teilfläche ist;
- sich aufgrund der teilweise blockierten Überströmfläche der Druck für die Saatkörner (15) im Sammelraum (14) erhöht, wodurch der druckbeaufschlagte Fluidstrom abnimmt, was zur Folge hat, dass dem Sammelraum (14) weniger Saatkörner zugeführt werden; und
- sich das Blockieren der Überströmfläche durch die Saatkörner (15) vermindert, weil der Füllstand im Füllbereich (22) des Sammelraums (14) abnimmt, so dass ein größerer Teilstrom in den Bypass-Kanal (17) gelangt, wodurch der Druck im Sammelraum (14) abnimmt, was dann eine Zunahme der Saatkornzufuhr mittels des druckbeaufschlagten Fluidstroms auslöst;
**dadurch gekennzeichnet, dass** der Bypass-Kanal (17) mit einem Fluidauslass (21) in Verbindung steht, welcher öffenbar und schließbar ist, sodass ergänzend zum Überströmen des Teilstroms in den Bypass-Kanal (17) zumindest ein Teil des überströmenden Fluidstroms nach außen ablassbar ist, sodass sich die Teilmenge verringert, welche in das Gehäuse (8) des Säherzens (9) eingeleitet wird.

3. Anordnung nach Anspruch 2, **dadurch gekennzeichnet, dass** die Überströmeinrichtung (18) in einem den Sammelraum (14) und den Bypass-Kanal (17) voneinander trennenden Wandabschnitt angeordnet ist.

4. Anordnung nach Anspruch 2 oder 3, **dadurch gekennzeichnet, dass** die Überströmeinrichtung (18) einen Siebabschnitt (19) aufweist, welcher von dem Teilstrom des druckbeaufschlagten Fluidstroms durchströmbar und die Saatkörner zurückhaltend ausgebildet ist.

5. Anordnung nach mindestens einem der Ansprüche 2 bis 4, **dadurch gekennzeichnet, dass** zumindest eines der folgenden Elemente wenigstens teilweise im Gehäuse des Säherzens (9) angeordnet ist: Bypass-Kanal (17) und Sammelraum (14).

6. Anordnung nach mindestens einem der Ansprüche 2 bis 5, **dadurch gekennzeichnet, dass** die Überströmeinrichtung (18) lösbar montiert ist.

7. Anordnung nach mindestens einem der Ansprüche 2 bis 6, **dadurch gekennzeichnet, dass** an dem Gehäuse (8) des Säherzens (9) ein Anschluss (13) angeordnet ist, welcher an eine Fluidstromzuleitung (5) anschließbar ist, um einen Fluidstrom zum Ausbilden der Überdruckumgebung im Gehäuse (8) einzuleiten.

8. Landwirtschaftliche Sämaschine, mit einer Anordnung nach mindestens einem der Ansprüche 2 bis 7.

## Claims

1. Method for separating seeds in an arrangement for an agricultural seed drill, with
- feeding seeds (15) by means of a pressurized fluid flow via a feed line (5), which couples to a feeder;
- collecting the seeds received via the feeder in a collection space (14);
- delivering the seeds (15) from the collection space (14) to a separating device, which is arranged in a housing (8) of a seed meter (9);
- separating the seeds (15) by means of the separating device in the housing (8) in an overpressure environment formed in the housing (8);
- spreading the separated seeds via an outlet (11) of the housing (8); and
- overflowing a partial flow of the pressurized fluid flow via an overflow device (18) in the area of a section of a wall (16), which delimits a filling area (22) of the collection space (14), into a bypass channel (17), which is formed separately from the collection space (14), and from there into the housing (8) such that the overpressure environment in the housing (8) is supported, wherein the overflow occurs free from overflow of the seeds (15);
wherein the seeds (15) are fed to the collection space (14) in a self-regulating manner, wherein in this case
- an overflow area of the overflow device (18), through which the partial flow of the pressurized fluid flow overflows into the bypass channel, is at least partially blocked by the seeds (15) in the filling area (22) of the collection space (14), wherein the partial flow overflowing into the bypass channel (17) is the smaller, the larger the partial area blocked by the overflow area is;
- due to the partially blocked overflow area, the pressure for the seeds (15) in the collection space (14) increases, whereby the pressurized fluid flow decreases, causing fewer seeds to be fed to the collection space (14); and
- the blocking of the overflow area is reduced by the seeds (15) because the fill level in the filling area (22) of the collection space (14) decreases such that a larger partial flow reaches the bypass channel (17), whereby the pressure in the collection space (14) decreases, which then triggers an increase in the seed feed by means of the pressurized fluid flow;
**characterized in that** the bypass channel (17) is connected to a fluid outlet (21), which can be opened and closed such that in addition to the overflow of the partial flow into the bypass channel (17), at least part of the overflowing fluid flow can be discharged to the outside such that the partial quantity introduced into the housing (8) of the seed meter (9) is reduced.

2. Arrangement for an agricultural seed drill, with:
- a feeder, which can be coupled to a feed line (5), via which the seeds can be fed by means of a pressurized fluid flow;
- a seed meter (9), which has a separating device in a housing (8), which is configured to separate the seeds in an overpressure environment formed inside the housing (8) and to deliver them for spreading via an outlet (11);
- a collection space (14), which is connected to the feeder and is configured to collect the seeds received via the feeder and to deliver them to the separating device;
- a bypass channel (17), which is formed separately from the collection space (14) and is in fluid connection with the inside of the housing (8); and
- an overflow device (18), which is arranged in the area of a section of a wall (16), which delimits a filling area (22) of the collection space (14), and which is in fluid connection with the feeder and/or the collection space (14) and is configured to allow a partial flow of the pressurized fluid flow to overflow into the bypass channel (17) and from there into the housing (8) supporting the overpressure environment and free from overflow of seeds transported by means of the pressurized fluid flow;
wherein the seeds (15) are fed to the collection space (14) in a self-regulating manner, wherein in this case
- an overflow area of the overflow device (18), through which the partial flow of the pressurized fluid flow overflows into the bypass channel, is at least partially blocked by the seeds (15) in the filling area (22) of the collection space (14), wherein the partial flow overflowing into the bypass channel (17) is the smaller, the larger the partial area blocked by the overflow area is;
- due to the partially blocked overflow area, the pressure for the seeds (15) in the collection space (14) increases, whereby the pressurized fluid flow decreases, causing fewer seeds to be fed to the collection space (14); and
- the blocking of the overflow area is reduced by the seeds (15) because the fill level in the filling area (22) of the collection space (14) decreases such that a larger partial flow reaches the bypass channel (17), whereby the pressure in the collection space (14) decreases, which then triggers an increase in the seed feed by means of the pressurized fluid flow;
**characterized in that** the bypass channel (17) is connected to a fluid outlet (21), which can be opened and closed such that in addition to the overflow of the partial flow into the bypass channel (17), at least part of the overflowing fluid flow can be discharged to the outside such that the partial quantity introduced into the housing (8) of the seed meter (9) is reduced.

3. Arrangement according to Claim 2, **characterized in that** the overflow device (18) is arranged in a wall section separating the collection space (14) and the bypass channel (17) from one another.

4. Arrangement according to Claim 2 or 3, **characterized in that** the overflow device (18) has a sieve section (19) through which the partial flow of the pressurized fluid flow can flow and which is designed to retain the seeds.

5. Arrangement according to at least one of Claims 2 to 4, **characterized in that** at least one of the following elements is arranged at least partially in the housing of the seed meter (9): bypass channel (17) and collection space (14).

6. Arrangement according to at least one of Claims 2 to 5, **characterized in that** the overflow device (18) is releasably mounted.

7. Arrangement according to at least one of Claims 2 to 6, **characterized in that** a connection (13) is arranged on the housing (8) of the seed meter (9), which connection can be connected to a fluid flow supply line (5) in order to introduce a fluid flow for forming the overpressure environment in the housing (8).

8. Agricultural seed drill having an arrangement according to at least one of Claims 2 to 7.

## Revendications

1. Procédé, destiné à désolidariser des semences dans un ensemble destiné à un semoir agricole, consistant à
- alimenter des semences (15) au moyen d'un courant de fluide soumis à une pression par l'intermédiaire d'une conduite d'alimentation (5), qui est reliée à une alimentation ;
- reprendre les semences réceptionnées par l'intermédiaire de l'alimentation dans un espace collecteur (14) ;
- restituer les semences (15) de l'espace collecteur (14) à un système de désolidarisation, qui est placé dans un carter (8) d'un coeur de semis (9) ;
- désolidariser les semences (15) au moyen du système de désolidarisation dans le carter (8) dans un environnement en surpression créé dans le carter (8) ;
- distribuer les semences désolidarisées par l'intermédiaire d'une sortie (11) du carter (8) ; et
- faire déborder un courant partiel du courant de fluide soumis à une pression par l'intermédiaire d'un système de trop-plein (18) dans la zone d'une section d'une paroi (16), qui délimite une zone de remplissage (22) de l'espace collecteur (14) dans une canalisation (17) de dérivation, qui est créée séparément de l'espace collecteur (14), et de là, dans le carter (8), de sorte à assister l'environnement en surpression dans le carter (8), le débordement s'effectuant sans empiètement par les semences (15) ;
les semences (15) étant susceptibles d'être alimentées en auto-régulation vers l'espace collecteur (14), à cet effet
- une surface de débordement du système de trop-plein (18), à travers laquelle le courant partiel du courant de fluide soumis à une pression déborde dans la canalisation de dérivation étant bloquée au moins partiellement par les semences (15) dans la zone de remplissage (22) de l'espace collecteur (14), le courant partiel débordant dans la canalisation (17) de dérivation étant d'autant plus faible que la surface partielle bloquée par la surface de débordement est grande ;
- du fait de la surface de débordement partiellement bloquée, la pression pour les semences (15) augmentant dans l'espace collecteur (14), suite à quoi, le courant de fluide soumis à une pression diminue, ce qui a pour conséquence que moins de semences sont alimentées vers l'espace collecteur (14) ; et
- le blocage de la surface de débordement par les semences (15) décroissant, car le niveau de remplissage dans la zone de remplissage (22) de l'espace collecteur (14) diminue, de sorte qu'un courant partiel plus important arrive dans la canalisation (17) de dérivation, suite à quoi, la pression dans l'espace collecteur (14) diminue, ce qui déclenche alors une augmentation de l'alimentation de semences au moyen du courant de fluide soumis à une pression ;
**caractérisé en ce que** la canalisation (17) de dérivation est en liaison avec une sortie (21) de fluide, qui peut s'ouvrir et se fermer, de sorte qu'en complément du débordement du courant partiel dans la canalisation (17) de dérivation, au moins une partie du courant de fluide débordant puisse être évacuée vers l'extérieur, de sorte que la quantité partielle, laquelle est introduite dans le carter (8) du coeur de semis (9) se réduise.

2. Ensemble destiné à un semoir agricole, comprenant :
- une alimentation, qui peut se coupler sur une conduite d'alimentation (5), par l'intermédiaire de laquelle les semences peuvent être alimentées au moyen d'un courant de fluide soumis à une pression ;
- un coeur de semis (9), lequel comporte un système de désolidarisation dans un carter (8), qui est aménagé pour désolidariser les semences dans un environnement en surpression créé à l'intérieur du carter (8) et pour les distribuer par l'intermédiaire d'une sortie (11) ;
- un espace collecteur (14), lequel est en liaison avec l'alimentation et est aménagé pour reprendre les semences réceptionnées par l'intermédiaire de l'alimentation et pour les restituer au système de désolidarisation ;
- une canalisation (17) de dérivation, qui est créée séparément de l'espace collecteur (14) et qui est en liaison fluidique avec l'intérieur du carter (8) ; et
- un système de trop-plein (18), qui est placé dans la zone d'une section d'une paroi (16), laquelle délimite une zone de remplissage (22) de l'espace collecteur (14) et qui est en liaison fluidique avec l'alimentation et / ou avec l'espace collecteur (14) et qui est aménagé pour faire déborder un courant partiel du courant de fluide soumis à une pression dans la canalisation (17) de dérivation et de là, dans le carter (8), en assistant l'environnement en surpression et sans empiètement par les semences, qui sont transportées au moyen du courant de fluide soumis à une pression ;
les semences (15) étant susceptibles d'être alimentées en auto-régulation vers l'espace collecteur (14), à cet effet
- une surface de débordement du système de trop-plein (18), à travers laquelle le courant partiel du courant de fluide soumis à une pression déborde dans la canalisation de dérivation étant bloquée au moins partiellement par les semences (15) dans la zone de remplissage (22) de l'espace collecteur (14), le courant partiel débordant dans la canalisation (17) de dérivation étant d'autant plus faible que la surface partielle bloquée par la surface de débordement est grande ;
- du fait de la surface de débordement partiellement bloquée, la pression pour les semences (15) augmentant dans l'espace collecteur (14), suite à quoi, le courant de fluide soumis à une pression diminue, ce qui a pour conséquence que moins de semences sont alimentées vers l'espace collecteur (14) ; et
- le blocage de la surface de débordement par les semences (15) décroissant, car le niveau de remplissage dans la zone de remplissage (22) de l'espace collecteur (14) diminue, de sorte qu'un courant partiel plus important arrive dans la canalisation (17) de dérivation, suite à quoi, la pression dans l'espace collecteur (14) diminue, ce qui déclenche alors une augmentation de l'alimentation de semences au moyen du courant de fluide soumis à une pression ;
**caractérisé en ce que** la canalisation (17) de dérivation est en liaison avec une sortie (21) de fluide, qui peut s'ouvrir et se fermer, de sorte qu'en complément du débordement du courant partiel dans la canalisation (17) de dérivation, au moins une partie du courant de fluide débordant puisse être évacuée vers l'extérieur, de sorte que la quantité partielle, laquelle est introduite dans le carter (8) du coeur de semis (9) se réduise.

3. Ensemble selon la revendication 2, **caractérisé en ce que** le système de trop-plein (18) est placé dans une section de paroi séparant l'un de l'autre l'espace collecteur (14) et la canalisation (17) de dérivation.

4. Ensemble selon la revendication 2 ou 3, **caractérisé en ce que** le système de trop-plein (18) comporte une section de tamisage (19), laquelle peut être traversée par le courant partiel du courant de fluide soumis à une pression et est conçue pour retenir les semences.

5. Ensemble selon au moins l'une quelconque des revendications 2 à 4, **caractérisé en ce qu'**au moins l'un des éléments suivants est placé au moins partiellement dans le carter du coeur de semis (9) : canalisation (17) de dérivation et espace collecteur (14).

6. Ensemble selon au moins l'une quelconque des revendications 2 à 5, **caractérisé en ce que** le système de trop-plein (18) est monté de manière amovible.

7. Ensemble selon au moins l'une quelconque des revendications 2 à 6, **caractérisé en ce que** sur le carter (8) du coeur de semis (9) est placé un raccord (13), lequel peut se raccorder sur une conduite d'alimentation (5) du courant de fluide, pour introduire un courant de fluide pour créer l'environnement en surpression dans le carter (8).

8. Semoir agricole, pourvu d'un ensemble selon au moins l'une quelconque des revendications 2 à 7.
